(19) **Europäisches Patentamt**
**European Patent Office**
**Office européen des brevets**

(11) **EP 1 766 431 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(21) Anmeldenummer: 05762944.6

(22) Anmeldetag: **05.07.2005**

(51) Int Cl.:
**G01S 7/497** (2006.01)

(86) Internationale Anmeldenummer:
**PCT/EP2005/053181**

(87) Internationale Veröffentlichungsnummer:
**WO 2006/005696 (19.01.2006 Gazette 2006/03)**

(54) **VERFAHREN UND VORRICHTUNG ZUR KOMPENSATION VON EINBAUTOLERANZEN EINES ABSTANDSSENSORS**

METHOD AND DEVICE FOR COMPENSATING MOUNTING TOLERANCES OF A PROXIMITY SENSOR

PROCEDE ET DISPOSITIF POUR COMPENSER DES TOLERANCES DE MONTAGE D'UN CAPTEUR DE DISTANCES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.07.2004 DE 102004033212**

(43) Veröffentlichungstag der Anmeldung:
**28.03.2007 Patentblatt 2007/13**

(73) Patentinhaber: **Hella KGaA Hueck & Co.**
**59552 Lippstadt (DE)**

(72) Erfinder:
- **HÖVER, Norbert**
  **59555 Lippstadt (DE)**
- **OTTENHUES, Thomas**
  **48447 Hörstel (DE)**

(56) Entgegenhaltungen:
**US-A- 6 122 040**

**Beschreibung**

Die Erfindung betrifft ein Verfahren zur Kompensation von Einbautoleranzen eines Abstandssensors an einem Fahrzeug gemäß dem Oberbegriff des Anspruchs 1 sowie eine Vorrichtung zur Durchführung des Verfahrens.

Abstandssensoren werden bei Fahrzeugen eingesetzt, um z.B. das Vorfeld eines Fahrzeugs abzutasten und die Signale z.B. für eine automatische Geschwindigkeitsregelung zu nutzen. Hierfür werden ein Winkel und ein Abstand zu einem Objekt gemessen. Dabei muss eine genaue Justage der Abstandssensoren gewährleistet sein, um für einen Zeitpunkt einen lateralen Abstand eines Objekts zum Fahrzeug zu bestimmen, der für eine korrekte Fahrspurzuordnung wesentlich ist. Einbautoleranzen führen hierbei zu einem Fehlwinkel, das heißt zu einer Winkeldifferenz zwischen einer Solllage und einer Istlage des Abstandssensors, so dass die Auswertung der Messwerte zu falschen Ergebnissen führt. Die ursprüngliche Justage mit definierten Abstrahlwinkeln kann sich durch den Fahrbetrieb verändern, besonders durch starke mechanische Beanspruchung, wie sie z.B. beim Durchfahren von Schlaglöchern auftreten kann. Daher wird eine Korrektur der Messwerte erforderlich.

Aus der DE 197 46 524 A1 ist eine Einrichtung zur Kompensation der Einbautoleranzen eines Abstandssensors an einem Fahrzeug bekannt. Der Abstandssensor weist einen Sollabstrahlwinkel relativ zum Fahrzeug auf und einen davon gegebenenfalls abweichenden tatsächlichen Istabstrahlwinkel. Die Einrichtung umfasst eine Auswerteelektronik zur Bestimmung von Abständen und Winkeln zu Objekten, wobei ein Objektwinkelmittelwert berechnet wird, der einem Sollrichtungswinkel entspricht. Zwischen diesem und dem Istabstrahlwinkel wird ein Korrekturdifferenzwinkel gebildet und zur Korrektur des aktuellen Objektwinkels genutzt. Hierfür ist ein relativ großer Speicher- und Rechenaufwand erforderlich, weil ein Fehler erst nach längeren Zeiträumen erfassbar ist. Weiterhin kann diese Kompensation nach einer tatsächlichen Verstellung des Sensors instabil werden. Aus der US 6 122 040 ist ein Verfahren gemäß dem Oberbegriff des Anspruchs 1 bekannt.

Aufgabe der Erfindung ist es, ein Verfahren und eine Vorrichtung zur Kompensation von Einbautoleranzen eines Abstandssensors an einem Fahrzeug zu schaffen, wobei die Kompensation mit geringem Aufwand innerhalb kurzer Zeit und zuverlässig durchgeführt werden kann.

Die Aufgaben sind durch die Merkmale der unabhängigen Ansprüche gelöst. Die Aussendung der Strahlen mit einem Öffnungswinkel von 0,1° bis 10° und die Bestimmung der Korrekturwerte durch Vergleich der bei den Kanalwechseln ermittelten Daten bewirkt, dass ein Objekt in der Regel von mehr als einem der Strahlen erfasst wird. Hierbei können bei jedem Kanalwechsel Winkel zu Objekten sehr genau und exakter als bisher bekannt bestimmt werden. Es können so Messfehler infolge von Einbautoleranzen des Abstandssensors aus den Messergebnissen der einzelnen Kanäle ermittelt werden. Es werden mehrere Möglichkeiten zur Auswertung der Daten geschaffen, die mit relativ geringem Aufwand durchführbar sind. Insbesondere ist keine Langzeitspeicherung einer Vielzahl von Daten erforderlich, so dass wenig Speicherplatz erforderlich ist und ohne große Datensammlung sofort auswertbare Messergebnisse zur Verfügung stehen. Auf diese Weise kann ein Korrekturwert mit Hilfe einer Auswerteeinheit berechnet werden, und damit ist eine sichere Kompensation einer möglichen Abweichung der Einbausituation des Abstandssensors von der Solllage gewährleistet.

Die Unteransprüche betreffen die vorteilhafte Ausgestaltung der Erfindung.

Die Ansprüche 2 bis 4 betreffen Auswerteverfahren für unterschiedliche Betriebsbedingungen.

Die Ansprüche 5, 6, 8 und 9 betreffen besonders günstige Werte für die Abstrahlwinkel.

Die Erfindung wird anhand von Beispielen weiter erläutert.

Es zeigen

Figur 1 das Blockschaltbild eines Abstandssensors,
Figur 2 die Darstellung des seitlichen Abstands zu einem stehenden Objekt,
Figur 3 die Darstellung des Abstands zu einem stehenden Objekt
und Figur 4 die Darstellung des Abstands zu einem fahrenden Objekt.

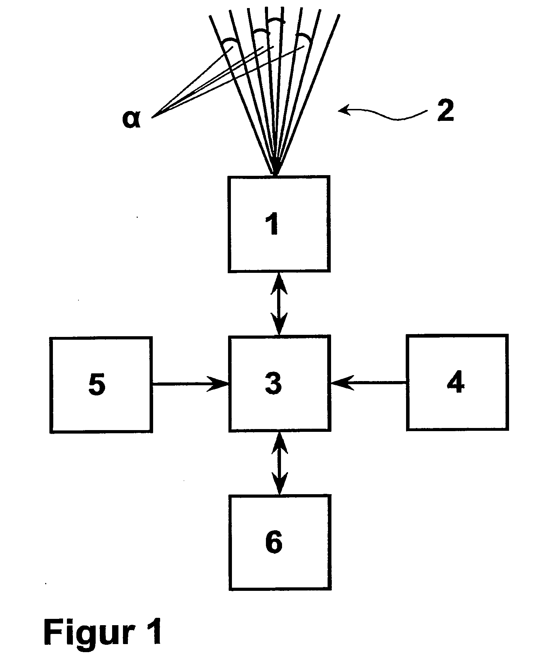

Nach Figur 1 ist im Frontbereich eines Kraftfahrzeugs ein Abstandssensor 1 so eingebaut, dass er sechzehn, nur teilweise dargestellte Strahlen 2, verteilt im Wesentlichen in Fahrtrichtung über einen definierten Winkelbereich, aussendet und die reflektierten Strahlen 2 empfängt. Der Öffnungswinkel $\alpha$ jedes Strahls 2 beträgt jeweils 1°, wobei wegen der Übersichtlichkeit der Öffnungswinkel $\alpha$ größer dargestellt ist. Jedem Strahl 2 ist ein Kanal zugeordnet. Der Abstandssensor 1 ist ein optischer Sensor, z.B. ein Infrarot-Laser.

Der Abstandssensor 1 ist mit einer Auswerteeinheit 3 elektrisch verbunden, die gleichzeitig Steuereinheit für den Abstandssensors 1 ist. An der Auswerteeinheit 3 sind weiterhin Mittel zur Bestimmung einer Geradeausfahrt 4, Mittel zur Bestimmung einer zurückgelegten Wegstrecke 5 und ein Geschwindigkeitsregler 6 angeschlossen. Die Mittel zur Bestimmung einer Geradeausfahrt 4 umfassen z.B. einen Gierratensensor, der die zeitliche Veränderung des Winkels der Fahrzeuglängsachse in einem festen Koordinatensystem angibt; die Wegstrecke wird z.B. aus der Geschwindigkeit des Fahrzeugs berechnet.

Der Öffnungswinkel $\alpha$ kann für den Abstandssensor 1 variabel sein, das heißt, dass dessen Strahlen 2 unterschiedliche Öffnungswinkel $\alpha$ aufweisen können.

Im Betrieb, also während der Fahrt, sendet der Abstandssensor 1 die Strahlen 2 aus. Hierbei wird er von der Auswerteeinheit 3 so angesteuert, dass die Strahlen 2 zyklisch getaktet gesendet werden. Reflektierte Strahlen 2 werden vom Abstandssensor 1 empfangen und an die Auswerteeinheit 3 geleitet. Hier wird als Daten für jeden der Strahlen 2 beim Kanalwechsel die Entfernung eines Objekts 7 aus der Laufzeit des reflektierten Strahls 2 bestimmt; der Winkel zwischen der Fahrzeuglängsachse und dem Objekt 7 ist durch den Abstrahlwinkel des Strahls 2 festgelegt. Es werden hierbei für die Kompensation nur die Daten ausgewertet, die bei Vorliegen eines Signals "Geradeausfahrt" der Mittel zur Bestimmung einer Geradeausfahrt 4 bestimmt wurden.

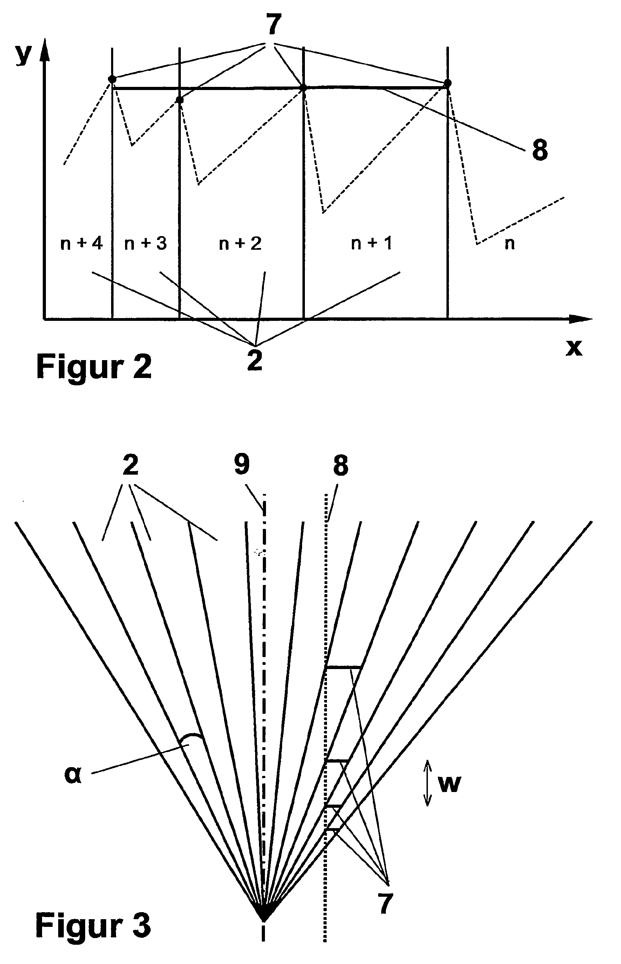

Die verschiedenen Möglichkeiten zur Ermittlung der Daten und zur Kompensation von Einbautoleranzen werden anhand der Figuren 2 bis 4 erläutert.

Bei einer Vorbeifahrt an einem stehenden Objekt 7, das sich seitlich von einer Straße befindet, erfassen die Strahlen 2 nacheinander dieses Objekt 7. Hierbei werden, wie aus Figur 2 für einen Teil der Strahlen 2 ersichtlich, während der Geradeausfahrt die Koordinaten, das sind der vordere (x- Achse) und der seitliche (y-Achse) Abstand des Objekts 7 zum Abstandssensor 1, ermittelt und für jeden Kanalwechsel kurzfristig gespeichert. Für die gespeicherten Koordinaten wird eine Regressionsgerade 8 berechnet, deren Steigung m ein Maß für den Fehlwinkel δ des Abstandssensors 1 ist. Bei richtig justiertem Abstandssensor 1 ist die Steigung m = 0. Der Fehlwinkel δ wird nach der Formel

$$\delta = \arctan m = \arctan (\Delta y / \Delta x)$$

berechnet und als Korrekturwert für die Daten genutzt. Hierbei entspricht $\Delta x$ der Differenz des vorderen Abstands und $\Delta y$ der durch die Regressionsgerade 8 bestimmten Differenz des seitlichen Abstands des Objekts 7 für das Auswertungsintervall.

Eine weitere Möglichkeit für die Ermittlung eines Korrekturwertes für eine Vorbeifahrt an einem stehenden Objekt 7 ist in Figur 3 dargestellt, wobei die Öffnungswinkel α der Kanäle größer gezeichnet sind als bei dem Abstandssensor 1 ausgeführt. Hier wird die Strecke w bestimmt, die das Fahrzeug zwischen zwei Kanalwechseln zurücklegt. Weiterhin wird für jeden Kanalwechsel der seitliche Abstand des Objekts 7 zum Abstandssensor 1 ermittelt und dann der Mittelwert a der Abstände berechnet. Mit diesen Werten wird der Ist- Winkel β zwischen einer Parallelen 9 zur Fahrzeugmittelachse und dem betreffenden Strahl 2 berechnet:

$$\beta = \arcsin \left[ \sqrt{\frac{a \cdot \sin \alpha}{w}} \right] - \frac{\alpha}{2}$$

Der Fehlwinkel δ ergibt sich aus der Differenz des berechneten Winkels β und des Soll-Winkels und ist bei korrekt justiertem Abstanssensor 1 null. Der Soll-Winkel wird um den Fehlwinkel δ korrigiert.

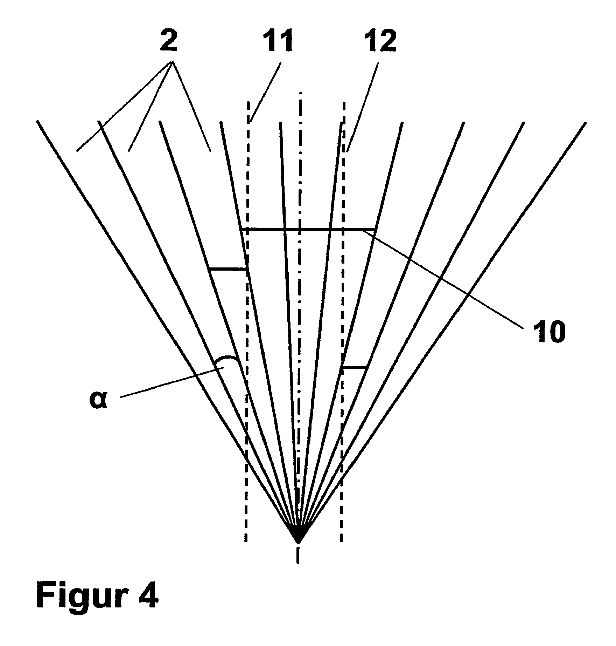

In Figur 4 ist die Situation für die Beobachtung eines vorausfahrenden zweiten Fahrzeugs 10 dargestellt, wobei die Öffnungswinkel α der Kanäle größer gezeichnet sind als bei dem Abstandssensor 1 ausgeführt. Hierbei werden jeweils eine Position einer linken Begrenzung 11 und einer rechten Begrenzung 12 des zweiten Fahrzeugs 10 relativ zum Fahrzeug bei einem Kanalwechsel bestimmt. Bei Geradeausfahrt werden aus den Positionen der beiden Begrenzungen 11, 12 die Mitte des zweiten Fahrzeugs 10 und der mittlere vordere Abstand d zwischen den beiden Fahrzeugen bestimmt. Weiterhin wird der seitliche Abstand f zwischen den Mitten der beiden Fahrzeuge berechnet. Der Fehlwinkel δ ergibt sich dann gemäß

$$\delta = \arcsin f / d$$

und wird als Korrekturwert benutzt.

Bei richtig eingestelltem Abstandssensor 1 und normalem Fahrverhalten ist δ gleich null.

Mit den beschriebenen unterschiedlichen Methoden stehen für die meisten Situationen zuverlässige Möglichkeiten zur Korrektur von Einbautoleranzen zur Verfügung.

**Patentansprüche**

1. Verfahren zur Kompensation von Einbautoleranzen eines Abstandssensors an einem Fahrzeug, wobei der Abstandssensor während des Betriebs eine Vielzahl von Strahlen in bestimmten Winkeln relativ zur Fahrzeugachse aussendet und reflektierte Strahlen empfängt, wobei jeder Strahl einem Kanal entspricht, wobei die Strahlen getaktet nacheinander ausgesendet werden und wobei Daten der Kanäle ausgewertet und gegebenenfalls korrigiert werden, **dadurch gekennzeichnet, dass** die Strahlen (2) in einem Öffnungswinkel (α) von 0,1° bis 10° ausgesendet werden, dass die Daten bei Geradeausfahrt erfasst werden und dass ein Fehlwinkel (δ) durch Vergleich der während eines Kanalwechsels ermittelten Daten bestimmt wird.

2. Verfahren nach Anspruch 1, **dadurch gekennzeichnet, dass** als Daten jeweils die Koordinaten eines stehenden Objekts (7) erfasst werden, dass für alle Koordinaten des Objekts (7) eine Regressionsgerade (8) bestimmt wird und dass als Fehlwinkel (δ) der Winkel zwischen der Regressionsgeraden (8) und einer Sollgeraden berechnet wird.

3. Verfahren nach Anspruch 1, **dadurch gekennzeichnet, dass** als Daten die Koordinaten eines stehenden Objekts (7) und jeweils die zurückgelegte Strecke (w) zwischen zwei Kanalwechseln bestimmt wird,
dass hieraus der tatsächliche Abstrahlwinkel (β) berechnet und mit einem Sollwert verglichen wird und dass als Fehlwinkel (δ) die Differenz zwischen diesen bestimmt wird.

4. Verfahren nach Anspruch 1, **dadurch gekennzeichnet, dass** als Daten Abstandsunterschiede zu einem vorausfahrenden zweiten Fahrzeug (10) und hierbei die seitlichen Begrenzungen (11, 12) des zweiten Fahrzeugs (10) erfasst werden,
und dass der Fehlwinkel (δ) aus einer Abweichung zwischen der erfassten Mitte f des vorausfahrenden Fahrzeugs (10) und der Mitte des Fahrzeugs bestimmt wird.

5. Verfahren nach einem der Ansprüche 1 bis 4, **dadurch gekennzeichnet, dass** der Öffnungswinkel (α) der Strahlen (2) 0,1° bis 5° beträgt.

6. Verfahren nach einem der Ansprüche 1 bis 4, **dadurch gekennzeichnet, dass** der Öffnungswinkel (α) der Strahlen (2) 1° beträgt.

7. Vorrichtung zur Kompensation von Einbautoleranzen eines Abstandssensors an einem Fahrzeug,
wobei der Abstandssensor zur Aussendung und zum Empfang einer Vielzahl von Strahlen in bestimmten Winkeln relativ zur Fahrzeugachse bestückt ist, wobei jeder Strahl einem Kanal entspricht,
mit einer Steuereinheit, die ein getaktetes Senden der Strahlen bewirkt,
und mit einer Auswerteeinheit für die von den Abstandssensoren bestimmten Daten, **dadurch gekennzeichnet, dass** der Öffnungswinkel (α) der Strahlen (2) 0,1° bis 10° beträgt,
dass Mittel zur Bestimmung einer Geradeausfahrt (4) angeordnet sind
und dass die Auswerteeinheit (3) Mittel zur Bestimmung eines Fehlwinkels (δ) durch Vergleich der bei Geradeausfahrt während eines Kanalwechsels ermittelten Daten aufweist.

8. Verfahren nach Anspruch 7, **dadurch gekennzeichnet, dass** der Öffnungswinkel (α) der Strahlen (2) 0,1° bis 5° beträgt.

9. Vorrichtung nach Anspruch 7, **dadurch gekennzeichnet, dass** der Öffnungswinkel (α) der Strahlen (2) 1° beträgt.

10. Vorrichtung nach einem der Ansprüche 7 bis 9, **dadurch gekennzeichnet, dass** der Abstandssensor (1) ein Infrarot- Lasersensor ist.

11. Vorrichtung nach einem der Ansprüche 7 bis 10, **dadurch gekennzeichnet, dass** der Abstandssensor (1) sechzehn Kanäle aufweist.

**Claims**

1. Method for compensating installation tolerances for a distance sensor on a vehicle, whereby during operation, the distance sensor transmits numerous beams at certain angles relative to the vehicle axis and receives reflected beams, whereby each beam corresponds to one channel, whereby the beams are transmitted in successive cycles
and whereby channel data is evaluated and corrected if necessary,
wherein the beams (2) are transmitted at an opening angle (a) from 0.1° to 10°,
the data are recorded during straight drives and a phase angle error (ö) is determined by comparing the data recorded during a change in channel.

2. Method according to claim 1, **wherein** the respective coordinates of a stationary object (7) are recorded as data, a regression line (8) is determined for all object (7) coordinates and the angle between the regression line (8) and a reference line is calculated as the phase error angle (ö).

3. Method according to claim 1, **wherein** the coordinates of a stationary object (7) and the distance covered (w) between two changes in channel are determined as data,
that the actual radiation angle (β) is calculated from this and compared with a reference value, and that the difference between these two is determined as the phase error angle (ö).

4. Method according to claim 1, **wherein** the differences in distance to a preceding second vehicle (10) and the limits at the side (11, 12) of the second vehicle (10) are to be recorded as data, and that the phase error angle (5) is determined from a deviation between the recorded center f of the preceding vehicle (10) and the center of the vehicle.

5. Method according to one of the claims 1 to 4, **wherein** the opening angle (a) of the beams (2) is 0.1° to 5°.

6. Method according to one of the claims 1 to 4, **wherein** the opening angle (a) of the beams (2) is 1 °.

7. Equipment for compensating the installation tolerances of a distance sensor on a vehicle,

whereby the distance sensor is equipped for the transmission and reception of numerous beams at certain angles relative to the vehicle axis, whereby each beam corresponds to one channel,
with a control unit which ensures cycled transmission of the beams, and with an evaluation unit for the data determined by the distance sensors, **wherein** the opening angle (a) of the beams (2) is 0.1° to 10°. That means are arranged for determining straight driving (4) and that the evaluation unit (3) has means of determining a phase error angle (S) by comparing the data recorded during a change in channel during a straight drive.

**8.** Method according to claim 7, **wherein** the opening angle (a) of the beams (2) is 0.1 ° to 5°.

**9.** Equipment according to claim 7, **wherein** the opening angle (a) of the beams (2) is 1 °.

**10.** Equipment according to one of the claims 7 to 9, **wherein** the distance sensor (1) is an infrared laser sensor.

**11.** Equipment according to one of the claims 7 to 10, wherein the distance sensor (1) has sixteen channels.

**Revendications**

**1.** Procédé de compensation de tolérances de montage d'un capteur de distance sur un véhicule,
le capteur de distance émettant pendant le roulage une multitude de rayons à différents angles par rapport à l'axe du véhicule et réceptionnant des rayons réfléchis, chaque rayon correspondant à un canal,
les rayons étant émis successivement de façon cyclique
et des données des canaux étant exploitées et éventuellement corrigées,
**caractérisé en ce que** les rayons (2) sont émis à un angle d'ouverture (α) de 0,1° à 10°,
**en ce que** les données sont enregistrées en marche en ligne droite
et **en ce qu'**une erreur angulaire (δ) est déterminée par comparaison des données relevées pendant un changement de canal.

**2.** Procédé selon la revendication 1, **caractérisé en ce que** les coordonnées d'un objet vertical (7) sont toujours enregistrées à titre de données,
**en ce qu'**une ligne de régression (8) est déterminée pour toutes les coordonnées d'un objet (7) et **en ce que** l'angle entre la ligne de régression (8) et une ligne théorique donne l'erreur angulaire (δ).

**3.** Procédé selon la revendication 1, **caractérisé en**

**ce que** les coordonnées d'un objet vertical (7) sont enregistrées à titre de données et la distance parcourue (w) entre deux changements de canaux est déterminée à chaque fois,
**en ce que** l'angle de rayonnement effectif (β) est calculé en conséquence et comparé à une valeur théorique
et **en ce que** la différence entre ces valeurs donne l'erreur angulaire (δ).

**4.** Procédé selon la revendication 1, **caractérisé en ce que** les différences de distance par rapport à un deuxième véhicule circulant devant (10) et donc les limitations latérales (11, 12) du deuxième véhicule (10) sont enregistrées à titre de données,
et **en ce que** l'erreur angulaire (δ) est déterminée à partir d'un écart entre le milieu f̲ enregistré du véhicule circulant devant (10) et le milieu du véhicule.

**5.** Procédé selon l'une quelconque des revendications 1 à 4, **caractérisé en ce que** l'angle d'ouverture (α) des rayons (2) est de 0,1° à 5°.

**6.** Procédé selon l'une quelconque des revendications 1 à 4, **caractérisé en ce que** l'angle d'ouverture (α) des rayons (2) est de 1°.

**7.** Dispositif de compensation de tolérances de montage d'un capteur de distance sur un véhicule,
le capteur de distance permettant d'émettre et de recevoir une multitude de rayons à différents angles par rapport à l'axe du véhicule étant prévu, chaque rayon correspondant à un canal,
avec une unité de commande qui produit un envoi cyclique des rayons,
et avec une unité d'exploitation pour les données déterminées par les capteurs de distance,
**caractérisé en ce que** l'angle d'ouverture (α) des rayons (2) est de 0,1° à 10°,
**en ce que** des moyens pour déterminer une marche en ligne droite (4) sont prévus
et **en ce que** l'unité d'exploitation (3) présente des moyens pour déterminer une erreur angulaire (δ) par comparaison des données relevées en marche en ligne droite pendant un changement de canal.

**8.** Dispositif selon la revendication 7, **caractérisé en ce que** l'angle d'ouverture (α) des rayons (2) est de 0,1 ° à 5°.

**9.** Dispositif selon la revendication 7, **caractérisé en ce que** l'angle d'ouverture (α) des rayons (2) est de 1°.

**10.** Dispositif selon l'une quelconque des revendications 7 à 9, **caractérisé en ce que** le capteur de distance (1) est un capteur laser infrarouge.

**11.** Dispositif selon l'une quelconque des revendications 7 à 10, **caractérisé en ce que** le capteur de distance (1) présente seize canaux.

**Figur 1**

**Figur 2**

**Figur 3**

**Figur 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19746524 A1

- US 6122040 A